# EUROPÄISCHE PATENTANMELDUNG

(11) **EP 4 675 577 A1**
(43) Veröffentlichungstag der Anmeldung: **07.01.2026**
(21) Anmeldenummer: 25181782.1
(22) Anmeldetag: 10.06.2025
(51) Int. Cl.: G06V 20/56, B60S 1/08, G01N 21/94, G06T 7/00

(54) **VERFAHREN ZUM ERKENNEN EINER BEEINTRÄCHTIGUNG EINER TRANSPARENZ EINER FENSTERSCHEIBE EINES SCHIENENFAHRZEUGS**

(30) Priorität: 05.07.2024 DE 102024206354
(71) Anmelder: Siemens Mobility GmbH, 80997 München (DE)
(72) Erfinder: Schüßler, Michael, 12305 Berlin (DE); Sema, Albi, 10629 Berlin (DE)
(74) Vertreter: Siemens Patent Attorneys

(57) **Zusammenfassung**

Die Erfindung betrifft ein Verfahren zum Erkennen einer Beeinträchtigung einer Transparenz einer Fensterscheibe eines Schienenfahrzeugs, umfassend die folgenden Schritte:
a) Aufnehmen von Videobildern der Fensterscheibe mittels einer in einem Innenraum angeordneten Videokamera, insbesondere CCTV-Videokamera, während einer Bewegung des Schienenfahrzeugs, um eine Bildsequenz aus den aufgenommen Videobildern zu erzeugen,
b) Berechnen eines optischen Flusses für die Videobilder der Bildsequenz,
c) Erkennen einer Beeinträchtigung einer Transparenz der Fensterscheibe basierend auf dem berechneten optischen Fluss.

Die Erfindung betrifft ein System zum Erkennen einer Beeinträchtigung einer Transparenz einer Fensterscheibe eines Schienenfahrzeugs, ein Schienenfahrzeug, ein Computerprogramm und ein maschinenlesbares Speichermedium.

## Beschreibung

Die Erfindung betrifft ein Verfahren und ein System zum Erkennen einer Beeinträchtigung einer Transparenz einer Fensterscheibe eines Schienenfahrzeugs, ein Schienenfahrzeug, ein Computerprogramm und ein maschinenlesbares Speichermedium.

Die Patentschrift EP 3 517 398 B1 offenbart ein Verfahren zur Innenraumzustandsüberwachung, sowie ein Fahrzeug mit einer Innenraumzustandsüberwachungseinrichtung. Das Fahrzeug kann ein spurgebundenes Fahrzeug sein. Das spurgebundene Fahrzeug kann ein Schienenfahrzeug sein.

Wenn eine Fensterscheibe eines Schienenfahrzeugs zum Beispiel beschädigt ist oder eine Verschmutzung aufweist, wird dadurch eine Transparenz der Fensterscheibe beeinträchtigt.

Es besteht ein Bedarf, solche Beeinträchtigungen zu erkennen, um zum Beispiel eine Reinigung oder eine Reparatur zu planen und zu veranlassen.

Die der Erfindung zugrunde liegende Aufgabe ist darin zu sehen, ein Konzept zum Erkennen einer Beeinträchtigung einer Transparenz einer Fensterscheibe eines Schienenfahrzeugs bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird ein Verfahren zum Erkennen einer Beeinträchtigung einer Transparenz einer Fensterscheibe eines Schienenfahrzeugs bereitgestellt, umfassend die folgenden Schritte:
a) Aufnehmen von Videobildern der Fensterscheibe mittels einer in einem Innenraum angeordneten Videokamera, insbesondere CCTV-Videokamera, während einer Bewegung des Schienenfahrzeugs, um eine Bildsequenz aus den aufgenommen Videobildern zu erzeugen,
b) Berechnen eines optischen Flusses für die Videobilder der Bildsequenz,
c) Erkennen einer Beeinträchtigung einer Transparenz der Fensterscheibe basierend auf dem berechneten optischen Fluss.

Nach einem zweiten Aspekt wird ein System zum Erkennen einer Beeinträchtigung einer Transparenz einer Fensterscheibe eines Schienenfahrzeugs bereitgestellt, umfassend:
eine Videokamera, insbesondere CCTV-Videokamera, welche eingerichtet ist, Videobilder einer Fensterscheibe eines Schienenfahrzeugs während einer Bewegung des Schienenfahrzeugs aufzunehmen, um eine Bildsequenz aus den aufgenommen Videobildern zu erzeugen,
eine Auswerteeinrichtung, welche eingerichtet ist, einen optischen Fluss für die Videobilder der Bildsequenz zu berechnen,
wobei die Auswerteeinrichtung eingerichtet ist, eine Beeinträchtigung der Transparenz der Fensterscheibe basierend auf dem berechneten optischen Fluss zu erkennen.

Nach einem dritten Aspekt wird ein Schienenfahrzeug bereitgestellt, umfassend das System nach dem zweiten Aspekt, wobei die Videokamera innerhalb eines Innenraums des Schienenfahrzeugs angeordnet ist.

Nach einem vierten Aspekt wird ein Computerprogramm bereitgestellt, umfassend Befehle, die bei Ausführung des Computerprogramms durch einen Computer, zum Beispiel durch das System nach dem zweiten Aspekt, diesen veranlassen, ein Verfahren gemäß dem ersten Aspekt auszuführen.

Nach einem fünften Aspekt wird ein maschinenlesbares Speichermedium bereitgestellt, auf dem das Computerprogramm nach dem vierten Aspekt gespeichert ist.

Die Erfindung basiert auf der Erkenntnis und schließt diese mit ein, dass die obige Aufgabe dadurch gelöst wird, indem während einer Bewegung des Schienenfahrzeugs eine Videokamera Videobilder der Fensterscheibe aufnimmt. Diese Videokamera ist in einem Innenraum angeordnet. Somit schaut diese Videokamera von innen nach außen, schaut also durch die Fensterscheibe nach draußen. Somit kann die Videokamera ein Umfeld des Schienenfahrzeugs durch die Fensterscheibe erfassen. Bei einer Bewegung des Schienenfahrzeugs bewegt sich somit aus Sicht der Videokamera das Umfeld des Schienenfahrzeugs. In den entsprechend aufgenommenen Videobildern gibt es somit Bereiche, die dieses bewegte Umfeld repräsentieren.

Wenn es einen Bereich der Fensterscheibe gibt, welcher die Transparenz beeinträchtigt, beispielsweise aufgrund von einer Beschädigung und/oder von einer Verschmutzung, kann die Videokamera durch diesen Bereich der Fensterscheibe das Umfeld des Schienenfahrzeugs nicht mehr so gut oder gar nicht erfassen verglichen mit einem Bereich, welcher nicht hinsichtlich einer Transparenz beeinträchtigt ist. Somit kann in einem solch beeinträchtigen Bereich kein sich bewegendes Umfeld des Schienenfahrzeugs durch die Videokamera erfasst bzw. aufgenommen werden.

Somit wird es Unterschiede im lokalen optischen Fluss geben abhängig davon, ob ein Bereich eine Beeinträchtigung hinsichtlich einer Transparenz oder nicht aufweist. Somit kann durch das Berechnen eines optischen Flusses für die Videobilder der Bildsequenz eine Beeinträchtigung einer Transparenz der Fensterscheibe effizient erkannt werden.

Somit wird insbesondere der technische Vorteil bewirkt, dass ein Konzept zum effizienten Erkennen einer Beeinträchtigung einer Transparenz einer Fensterscheibe eines Schienenfahrzeugs bereitgestellt ist.

Eine Beeinträchtigung einer Transparenz einer Fensterscheibe im Sinne der Beschreibung ist oder umfasst zum Beispiel eine Verschmutzung und/oder eine Beschädigung.

Die Beeinträchtigung kann sich zum Beispiel außen auf der Fensterscheibe oder innen auf der Fensterscheibe befinden. Dies heißt also, dass sich die Beeinträchtigung auf einer Außenseite oder auf einer Innenseite der Fensterscheibe befinden kann.

Mittels des hier beschriebenen Konzepts ist es insbesondere in vorteilhafter Weise ermöglicht, auch mehrere Beeinträchtigungen einer Transparenz der Fensterscheibe zu erkennen. Ausführungen, die im Zusammenhang mit einer Beeinträchtigung gemacht sind, gelten analog für mehrere Beeinträchtigungen und umgekehrt.

In einer Ausführungsform des Verfahrens ist vorgesehen, dass der berechnete optische Flusses über die Zeit integriert wird, wobei die Beeinträchtigung der Transparenz basierend auf dem zeitlichen Integral des berechneten optischen Flusses erkannt wird.

Dadurch wird zum Beispiel der technische Vorteil bewirkt, dass die Beeinträchtigung der Transparenz effizient erkannt werden kann.

Gemäß dieser Ausführungsform ist somit insbesondere vorgesehen, dass ein zeitlicher Verlauf des optischen Flusses ermittelt wird, wobei basierend auf dem zeitlichen Verlauf des optischen Flusses die Beeinträchtigung der Transparenz erkannt wird.

In einer Ausführungsform des Verfahrens ist vorgesehen, dass der optische Fluss pixelweise für die Pixel der Videobilder berechnet wird, sodass den Pixeln der Videobilder jeweils ein optischer Flusswert zugeordnet wird, wobei die Beeinträchtigung der Transparenz basierend auf den jeweiligen optischen Flusswerten erkannt wird.

Dadurch wird zum Beispiel der technische Vorteil bewirkt, dass die Beeinträchtigung der Transparenz effizient erkannt werden kann.

In einer Ausführungsform des Verfahrens ist vorgesehen, dass der pixelweise berechnete optische Fluss pixelweise über die Zeit integriert wird, sodass den Pixeln der Videobilder jeweils ein zeitlicher Integralwert zugeordnet wird, wobei die Beeinträchtigung der Transparenz basierend auf den jeweiligen zeitlichen Integralwerten erkannt wird.

Dadurch wird zum Beispiel der technische Vorteil bewirkt, dass die Beeinträchtigung der Transparenz effizient erkannt werden kann.

Gemäß dieser Ausführungsform ist somit insbesondere vorgesehen, dass für Pixel der Videobilder jeweils der zeitliche Verlauf des optischen Flusses ermittelt wird, wobei die Beeinträchtigung der Transparenz basierend auf den jeweiligen zeitlichen Verläufen erkannt wird.

In einer Ausführungsform des Verfahrens ist vorgesehen, dass basierend auf einem Schwellwert eine Maske von statischen Bereichen der Fensterscheibe ermitteltet wird, wobei die Beeinträchtigung der Transparenz basierend auf der ermittelten Maske erkannt wird.

Dadurch wird zum Beispiel der technische Vorteil bewirkt, dass die Beeinträchtigung der Transparenz effizient erkannt werden kann.

Gemäß dieser Ausführungsform ist somit vorgesehen, dass ein Schwellwert vorgegeben wird, wobei optische Flusswerte, die größer oder größer gleich dem Schwellwert sind, Bereichen der Fensterscheibe zugeordnet werden, die Bewegung zeigen, die somit vorliegend nicht hinsichtlich einer Transparenz beeinträchtigt sind. Bereiche der Fensterscheibe, deren zugeordneter optischer Fluss kleiner oder kleiner gleich dem Schwellwert sind, entsprechen somit Bereichen, durch welche aufgrund einer Beeinträchtigung der Transparenz beeinträchtigt durchgeschaut werden kann, sodass in diesen Bereichen weniger Bewegung bis gar keine Bewegung mehr zu sehen ist durch die Videokamera.

Zum Beispiel ist vorgesehen, dass die pixelweise berechneten jeweiligen zeitlichen Integralwerte jeweils mit dem Schwellwert verglichen werden, wobei basierend auf diesem Vergleich die Beeinträchtigung der Transparenz erkannt wird.

In einer Ausführungsform des Verfahrens ist vorgesehen, dass zeitlich vor dem Schritt a) eine Kalibrierung durchgeführt wird, wobei die Kalibrierung die folgenden Schritte umfasst: Aufnehmen von Videoreferenzbildern der Fensterscheibe mittels der im Innenraum angeordneten Videokamera während einer Bewegung des Schienenfahrzeugs, um eine Referenzbildsequenz aus den aufgenommen Videoreferenzbildern zu erzeugen, wobei sich die Fensterscheibe während der Aufnahme der Videoreferenzbilder in einem bekannten Zustand befindet,
Berechnen eines optischen Referenzflusses für die Videorefrenzbilder der Referenzbildsequenz,
wobei die Beeinträchtigung der Transparenz basierend auf dem optischen Referenzfluss erkannt wird.

Dadurch wird zum Beispiel der technische Vorteil bewirkt, dass die Beeinträchtigung der Transparenz effizient erkannt werden kann.

Gemäß dieser Ausführungsform ist also insbesondere vorgesehen, dass vor dem eigentlichen Erkennen der Beeinträchtigung eine Kalibrierung durchgeführt wird. Hierbei befindet sich die Fensterscheibe in einem bekannten Zustand. Der bekannte Zustand zeichnet sich zum Beispiel dadurch aus, dass die Fensterscheibe frei von einer Beeinträchtigung der Transparenz ist.

Zum Beispiel ist während des Kalibrierungsverfahrens vorgesehen, dass die Videokamera die Fensterscheibe komplett erfassen kann. Somit befinden sich zum Beispiel während der Kalibrierung keine Hindernisse zwischen Videokamera und Fensterscheibe. Zum Beispiel kann das Kalibrierungsverfahren durchgeführt werden, wenn sich keine Person innerhalb des Innenraums befindet. Sofern sich eine Person im Innenraum des Schienenfahrzeugs befinden sollte, wird zum Beispiel während des Kalibrierungsverfahrens sichergestellt, dass diese Person sich nicht zwischen Videokamera und Fensterscheibe befindet.

In einer Ausführungsform des Verfahrens ist vorgesehen, dass basierend auf dem optischen Referenzfluss eine die sich im bekannten Zustand befindende Fensterscheibe repräsentierende Kalibrierungsmaske ermittelt wird, wobei die Beeinträchtigung der Transparenz basierend auf der Kalibrierungsmaske erkannt wird.

Dadurch wird zum Beispiel der technische Vorteil bewirkt, dass die Beeinträchtigung der Transparenz effizient erkannt werden kann.

In einer Ausführungsform des Verfahrens ist vorgesehen, dass die Kalibrierungsmaske und die ermittelte Maske überlagert werden, um eine überlagerte Maske zu erhalten, wobei die Beeinträchtigung der Transparenz basierend auf der überlagerten Maske erkannt wird.

Dadurch wird zum Beispiel der technische Vorteil bewirkt, dass die Beeinträchtigung der Transparenz effizient erkannt werden kann.

Durch das Überlagern der beiden Masken kann somit effizient erkannt werden, welche Bereiche der Fensterscheibe, die gemäß der im Rahmen des Erkennungsverfahrens ermittelten Maske statischen Bereichen entsprechen, bereits in der Kalibrierungsmaske vorhanden sind. Solche Bereiche waren somit bereits vorhanden während des Kalibrierungsverfahrens, also während sich die Fensterscheibe in dem bekannten Zustand befunden hat. Mit anderen Worten kann somit festgelegt werden, dass es für diese Bereiche keine Verschlechterung hinsichtlich der Transparenz bezogen auf den Zeitpunkt des Kalibrierungsverfahrens gegeben hat.

Entsprechende statische Bereiche, die nicht in der Kalibrierungsmaske vorhanden sind, sind somit neu hinzugekommen und können somit als eine Beeinträchtigung der Transparenz der Fensterscheibe erkannt werden.

In einer Ausführungsform des Verfahrens ist vorgesehen, dass basierend auf den aufgenommenen Videobildern eine Anomaliedetektion für die Fensterscheibe durchgeführt wird, um eine Anomalie der Fensterscheibe zu detektieren, wobei die Beeinträchtigung der Transparenz der Fensterscheibe basierend auf einem Ergebnis der Anomaliedetektion erkannt wird.

Dadurch wird zum Beispiel der technische Vorteil bewirkt, dass die Beeinträchtigung der Transparenz effizient erkannt werden kann. Gemäß dieser Ausführungsform ist also vorgesehen, dass zusätzlich zum optischen Fluss eine Anomaliedetektion durchgeführt wird, um eine Anomalie der Fensterscheibe zu erkennen. Das Ergebnis der Anomaliedetektion wird zusätzlich zum optischen Fluss verwendet, um die Beeinträchtigung zu erkennen.

Gemäß dieser Ausführungsform ist also vorgesehen, dass Verfahren aus der Domäne der Computervision und des Machine Learning kombiniert werden: nämlich die Verfahrensklasse "optischer Fluss" und die Verfahrensklasse "Anomaliedetektion".

Somit kann eine Beeinträchtigung der Transparenz der Fensterscheibe besonders robust erkannt werden. Mit anderen Worten kann ein Ergebnis einer optischen Flussberechnung hinsichtlich einer Beeinträchtigung der Transparenz der Fensterscheibe durch ein Ergebnis der Anomaliedetektion plausibilisiert oder abgesichert werden.

Somit kann in vorteilhafter Weise eine Beeinträchtigung der Transparenz der Fensterscheibe besonders zuverlässig erkannt werden.

In einer Ausführungsform des Verfahrens ist vorgesehen, dass basierend auf dem Anomaliedetektionsergebnis eine Anomaliemaske von anomalen Bereichen der Fensterscheibe ermittelt wird, wobei die Beeinträchtigung der Transparenz basierend auf der Anomaliemaske erkannt wird.

Dadurch wird zum Beispiel der technische Vorteil bewirkt, dass die Beeinträchtigung der Transparenz effizient erkannt werden kann.

In einer Ausführungsform des Verfahrens ist vorgesehen, dass die Anomaliemaske mit der ermittelten Maske oder mit der überlagerten Maske zusammengeführt wird, um eine zusammengeführte Maske zu erhalten, wobei die Beeinträchtigung der Transparenz basierend auf der zusammengeführten Maske erkannt wird.

Dadurch wird zum Beispiel der technische Vorteil bewirkt, dass die Beeinträchtigung der Transparenz effizient erkannt werden kann.

Somit können Ergebnisse der Anomaliedetektion in effizienter Weise mit Ergebnissen der optischen Flussberechnung verglichen werden, um basierend darauf eine Beeinträchtigung der Transparenz der Fensterscheibe zu erkennen.

In einer Ausführungsform des Verfahrens ist vorgesehen, dass zeitlich vor dem Schritt a) eine Anomaliekalibrierung durchgeführt wird, wobei die Anomaliekalibrierung die folgenden Schritte umfasst:
Aufnehmen von Anomaliereferenzvideobildern der Fensterscheibe mittels der im Innenraum angeordneten Videokamera während eines Stillstands und/oder während einer Bewegung des Schienenfahrzeugs, um eine Anomaliereferenzbildsequenz aus den aufgenommen Anomaliereferenzvideobildern zu erzeugen, wobei sich die Fensterscheibe während der Aufnahme der Anomaliereferenzvideobilder in einem bekannten Zustand befindet,
Trainieren eines Anomaliedetektionsmodells basierend auf den Anomaliereferenzvideobildern der Anomaliereferenzbildsequenz, um ein trainiertes Anomaliedetektionsmodell zu erhalten, wobei die Beeinträchtigung der Transparenz basierend auf dem trainierten Anomaliedetektionsmodell erkannt wird.

Dadurch wird zum Beispiel der technische Vorteil bewirkt, dass die Beeinträchtigung der Transparenz effizient erkannt werden kann.

Für die Anomaliekalibrierung können zum Beispiel die gleichen aufgenommenen Videobilder der sich im bekannten Zustand befindenden Fensterscheibe verwendet werden wie für die vorstehend beschriebene Kalibrierung im Zusammenhang mit dem optischen Referenzfluss.

In einer Ausführungsform des Verfahrens ist vorgesehen, dass basierend auf dem optischen Fluss eine Heatmap der Fensterscheibe ermittelt wird. Mit anderen Worten wird zum Beispiel der berechnete optische Fluss der Fensterscheibe in einer Heatmap dargestellt beziehungsweise durch eine solche repräsentiert. Zum Beispiel ist vorgesehen, dass die pixelweise berechneten jeweiligen zeitlichen Integralwerte durch eine solche Heatmap repräsentiert werden.

Durch das Vorsehen einer solchen Heatmap kann in vorteilhafter Weise ermöglicht werden, dass ein Mensch einfach erkennen kann, ob es eine Beeinträchtigung der Fensterscheibe gibt oder nicht. Somit kann in vorteilhafter Weise einem Menschen visuell effizient ein momentaner Zustand der Fensterscheibe hinsichtlich einer Beeinträchtigung einer Transparenz der Fensterscheibe ermöglicht werden.

In einer Ausführungsform des Verfahrens ist vorgesehen, dass basierend auf dem Ergebnis der Anomaliedetektion eine weitere Heatmap der Fensterscheibe ermittelt wird. Mit anderen Worten wird zum Beispiel das Ergebnis der Anomaliedetektion in einer weiteren Heatmap dargestellt beziehungsweise durch eine solche repräsentiert.

Durch das Vorsehen einer solchen weiteren Heatmap kann in vorteilhafter Weise ermöglicht werden, dass ein Mensch einfach erkennen kann, ob es eine Beeinträchtigung der Fensterscheibe gibt oder nicht. Somit kann in vorteilhafter Weise einem Menschen visuell effizient ein momentaner Zustand der Fensterscheibe hinsichtlich einer Beeinträchtigung einer Transparenz der Fensterscheibe ermöglicht werden.

Das Verfahren ist zum Beispiel ein computerimplementiertes Verfahren.

Das Verfahren wird zum Beispiel mittels des Systems durchgeführt.

Das System ist zum Beispiel eingerichtet, alle Schritte des Verfahrens durchzuführen.

Das System ist zum Beispiel programmtechnisch eingerichtet, das Computerprogramm auszuführen.

Verfahrensmerkmale ergeben sich aus entsprechenden Systemmerkmalen und umgekehrt. Ausführungen, die im Zusammenhang mit dem System gemacht sind, gelten analog für das Verfahren und umgekehrt.

Die hier beschriebenen Ausführungsbeispiele und Ausführungsformen können in beliebiger Weise miteinander kombiniert werden, auch wenn dies nicht explizit beschrieben ist.

Somit ist zum Beispiel die Auswerteeinrichtung des Systems insbesondere eingerichtet, ein oder mehrere der im Rahmen des Verfahrens beschriebenen Schritte, bis auf die Schritte des Aufnehmens der Videobilder, durchzuführen.

Eine Videokamera im Sinne der Beschreibung ist zum Beispiel eine CCTV-Videokamera. Die Abkürzung "CCTV" steht für "Closed Circuit Television", was die englische Bezeichnung für "Videoüberwachung" ist.

Mit anderen Worten handelt es sich bei der Videokamera zum Beispiel um eine Videokamera, die der Überwachung von Personen dient.

Somit kann eine solche Videokamera in vorteilhafter Weise zwei Funktionen erfüllen: Überwachung von Personen und Erkennen einer Beeinträchtigung einer Transparenz der Fensterscheibe.

Die Videokamera ist zum Beispiel an einer Decke angeordnet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
FIG 1 ein Ablaufdiagramm eines Verfahrens zum Erkennen einer Beeinträchtigung einer Transparenz einer Fensterscheibe eines Schienenfahrzeugs,
FIG 2 ein System zum Erkennen einer Beeinträchtigung einer Transparenz einer Fensterscheibe eines Schienenfahrzeugs,
FIG 3 ein Schienenfahrzeug,
FIG 4 ein maschinenlesbares Speichermedium,
FIG 5 ein Ablaufdiagramm eines Kalibrierungsverfahrens zum Berechnen eines optischen Referenzflusses,
FIG 6 ein Ablaufdiagramm eines Verfahrens zum Erkennen einer Beeinträchtigung einer Transparenz einer Fensterscheibe basierend auf dem gemäß dem Kalibrierungsverfahren der FIG 5 berechneten optischen Referenzfluss,
FIG 7 ein Ablaufdiagramm eines Anomaliedetektionskalibrierungsverfahrens,
FIG 8 ein Ablaufdiagramm eines Anomaliedetektionsverfahrens und
FIG 9 ein Ablaufdiagramm eines Verfahrens zum Erkennen einer Beeinträchtigung einer Transparenz einer Fensterscheibe eines Schienenfahrzeugs unter Verwendung der Ergebnisse gemäß den Ablaufdiagrammen gemäß FIG 6 und FIG 8
FIG 10 eine Fensterscheibe eines Schienenfahrzeugs,
FIG 11 eine Heatmap der Fensterscheibe der FIG 10,
FIG 12 ein Ergebnis einer Anomaliedetektion für die Fensterscheibe der FIG 10 und
FIG 13 ein Zusammenführen des Ergebnisses der Anomaliedetektion gemäß FIG 12 und der Heatmap gemäß FIG 11
zeigen.

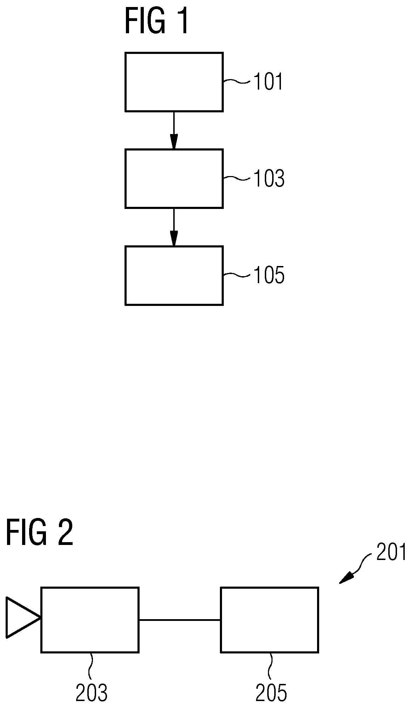

FIG 1 zeigt ein Ablaufdiagramm eines Verfahrens zum Erkennen einer Beeinträchtigung einer Transparenz einer Fensterscheibe eines Schienenfahrzeugs, umfassend die folgenden Schritte:
a) Aufnehmen 101 von Videobildern der Fensterscheibe mittels einer in einem Innenraum angeordneten Videokamera, insbesondere CCTV-Videokamera, während einer Bewegung des Schienenfahrzeugs, um eine Bildsequenz aus den aufgenommen Videobildern zu erzeugen,
b) Berechnen 103 eines optischen Flusses für die Videobilder der Bildsequenz,
c) Erkennen 105 einer Beeinträchtigung einer Transparenz der Fensterscheibe basierend auf dem berechneten optischen Fluss.

FIG 2 zeigt ein System 201 zum Erkennen einer Beeinträchtigung einer Transparenz einer Fensterscheibe eines Schienenfahrzeugs, umfassend:
eine Videokamera 203, insbesondere CCTV-Videokamera, welche eingerichtet ist, Videobilder einer Fensterscheibe eines Schienenfahrzeugs während einer Bewegung des Schienenfahrzeugs aufzunehmen, um eine Bildsequenz aus den aufgenommen Videobildern zu erzeugen,
eine Auswerteeinrichtung 205, welche eingerichtet ist, einen optischen Fluss für die Videobilder der Bildsequenz zu berechnen,
wobei die Auswerteeinrichtung 205 eingerichtet ist, eine Beeinträchtigung der Transparenz der Fensterscheibe basierend auf dem berechneten optischen Fluss zu erkennen.

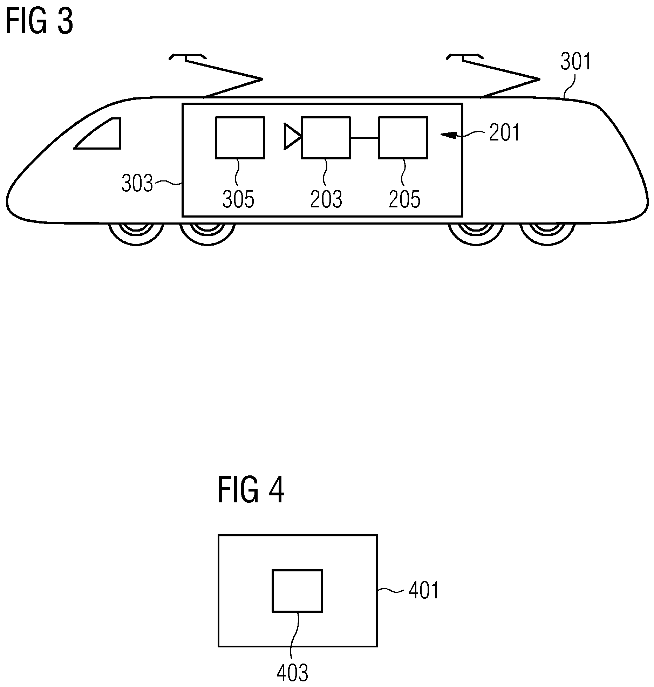

FIG 3 zeigt ein Schienenfahrzeug 301, welches das System 201 der FIG 2 umfasst. Die Videokamera 203 ist innerhalb eines Innenraums 303 angeordnet. Die Videokamera 203 ist zum Beispiel an einer Decke des Innenraums 303 angeordnet. Die Videokamera 203 ist derart ausgerichtet, dass sie Videobilder einer Fensterscheibe 305 des Innenraums 303 aufnehmen kann.

Merkmale des Schienensystems ergeben sich analog aus Systemmerkmalen und Verfahrensmerkmalen und umgekehrt. Ausführungen, die im Zusammenhang mit dem Schienenfahrzeug gemacht sind, gelten analog für das Verfahren und für das System und umgekehrt.

Ein Schienenfahrzeug im Sinne der Beschreibung ist zum Beispiel eines der folgenden Schienenfahrzeuge: Triebzug, Güterwagen, Reisezugwagen, Lokomotive.

FIG 4 zeigt ein maschinenlesbares Speichermedium 401, auf dem ein Computerprogramm 403 gespeichert ist. Das Computerprogramm 403 umfasst Befehle, die bei Ausführung des Computerprogramms 403 durch einen Computer, beispielsweise durch das System 201 der FIG 2, diesen veranlassen, ein Verfahren gemäß dem ersten Aspekt auszuführen.

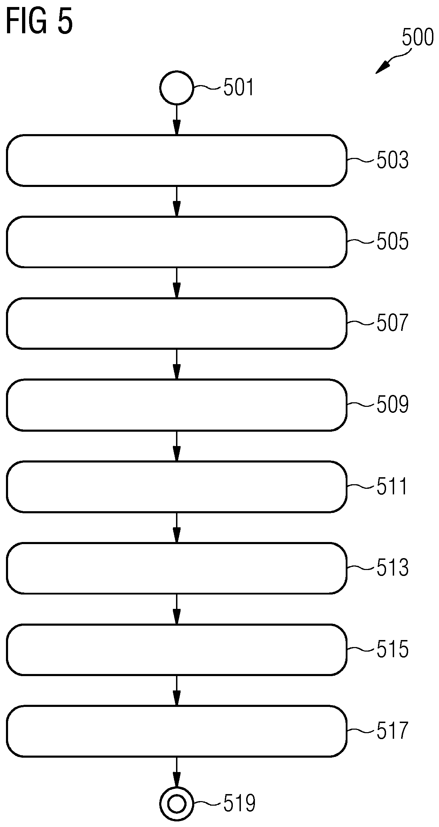

FIG 5 zeigt ein Ablaufdiagramm 500 eines Kalibrierungsverfahrens, wie es im Rahmen des hier beschriebenen Konzepts verwendet werden kann. Es wird angemerkt, dass auch nur ein oder mehrere oder alle Schritte des in FIG 5 gezeigten Ablaufdiagramms beim hier beschriebenen Konzept verwendet werden können.

Das Kalibrierungsverfahren startet beim Block 501. Gemäß einem Block 503 wird eine Videokamera, welche innerhalb eines Innenraums eines Schienenfahrzeugs angeordnet ist, initialisiert, wobei ein Fenster des Schienenfahrzeugs im Aufnahmebereich beziehungsweise Sichtbereich der Videokamera ist.

Gemäß einem Block 505 ist vorgesehen, dass Objekte, welche eine freie Sicht der Videokamera auf die Fensterscheibe beeinträchtigen, entfernt werden.

Gemäß einem Block 507 ist vorgesehen, dass sichergestellt wird, dass die Fensterscheibe frei von einer Beeinträchtigung einer Transparenz der Fensterscheibe ist. Zum Beispiel wird die Fensterscheibe gesäubert. Dies umfasst zum Beispiel, dass eine Außenseite und/oder eine Innenseite der Fensterscheibe gesäubert beziehungsweise gereinigt wird.

Gemäß einem Block 509 ist vorgesehen, dass Maßnahmen ergriffen werden, um das Schienenfahrzeug zu bewegen. Zum Beispiel ist das Schienenfahrzeug an eine Lokomotive angekoppelt, sodass zum Beispiel vorgesehen ist, dass die Lokomotive derart gesteuert wird, dass sie das Schienenfahrzeug bewegt.

Gemäß einem Block 511 ist vorgesehen, dass ein Kalibrierungsmodus aktiviert wird. Dies bedeutet also zum Beispiel, dass eine Auswerteeinrichtung eines Systems nach dem zweiten Aspekt in einen Kalibrierungsmodus geschaltet beziehungsweise betrieben wird.

Gemäß einem Block 513 ist vorgesehen, dass die Videokamera Videobilder der Fensterscheibe aufnimmt, während sich das Schienenfahrzeug bewegt, wobei ein optischer Fluss für die Videobilder berechnet wird, welcher über die Zeit integriert wird. Dies wird pixelweise für die Pixel der Videobilder durchgeführt, sodass den Pixeln der Videobilder jeweils ein optischer Flusswert zugeordnet wird.

Die Videokamera nimmt nicht nur ausschließlich die Fensterscheibe auf, sondern auch Bereiche des Innenraums um die Fensterscheibe herum. Diese Bereiche bewegen sich aus Sicht der Videokamera nicht, sind also statisch, wohingegen sich Objekte außerhalb des Schienenfahrzeugs, welche die Videokamera aufnimmt, bewegen, sodass der optische Fluss für diese Bereiche der Umgebung des Schienenfahrzeugs, welche die Videokamera durch die Fensterscheibe aufnimmt, unterschiedlich ist zum optischen Fluss der statischen Bereiche um die Fensterscheibe herum...

Somit wird gemäß dem Block 515 ein Schwellwert vorgegeben, um die statischen Bereiche von den dynamischen Bereichen zu unterscheiden, sodass über die dynamischen Bereiche festgelegt werden kann, was in den Videobildern die Fensterscheibe ist und was nicht.

Somit können gemäß dem Block 515 diejenigen Pixel der Videobilder festgelegt oder bestimmt werden, welche der Fensterscheibe entsprechen.

Gemäß einem Block 517 ist vorgesehen, dass eine Kalibrierungsmaske ermittelt beziehungsweise erzeugt wird, wobei dies basierend auf den zuvor festgelegten Pixeln der Fensterscheibe durchgeführt wird. Mit anderen Worten ist vorgesehen, dass eine die sich im bekannten Zustand befindende Fensterscheibe repräsentierende Kalibrierungsmaske ermittelt wird.

Das Kalibrierungsverfahren endet im Block 519.

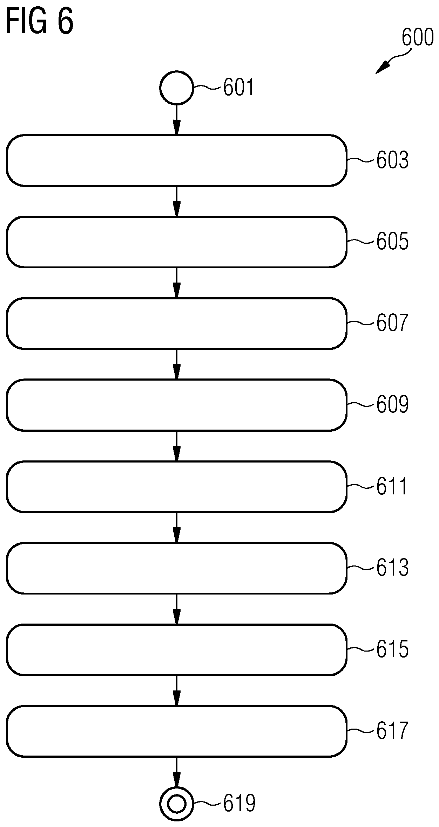

FIG 6 zeigt ein Ablaufdiagramm 600 eines Verfahrens zum Erkennen einer Beeinträchtigung einer Transparenz einer Fensterscheibe eines Schienenfahrzeugs.

Hierbei ist vorgesehen, dass im Rahmen des Verfahrens die vorstehend bezeichnete Kalibrierungsmaske gemäß dem Ablaufdiagramm der FIG 5 verwendet wird. Entsprechend wird die gleiche Videokamera verwendet, wie sie zuvor im Rahmen des Kalibrierungsverfahrens verwendet wurde beziehungsweise beschrieben wurde.

Das Verfahren startet beim Block 601.

Gemäß Block 603 ist vorgesehen, dass die Videokamera initialisiert wird. Die Videokamera nimmt Videobilder der Fensterscheibe auf.

Gemäß Block 605 ist vorgesehen, dass die zuvor berechnete oder ermittelte Kalibrierungsmaske bereitgestellt wird, beispielsweise aus einem Speicher geladen wird.

Gemäß Block 607 ist vorgesehen, dass Videobilder der Fensterscheibe mittels der Videokamera aufgenommen werden, während sich das Schienenfahrzeug bewegt. Gemäß Block 607 ist weiter vorgesehen, dass ein optischer Fluss für die Videobilder der Bildsequenz berechnet wird. Dies wird gemäß Block 607 zum Beispiel für eine bestimmte Zeit t durchgeführt.

Gemäß Block 609 ist vorgesehen, dass der berechnete optische Fluss über die Zeit integriert wird, wobei dies pixelweise durchgeführt wird. Mit anderen Worten ist vorgesehen, dass der optische Fluss pixelweise berechnet wird, wobei der pixelweise berechnete optische Fluss pixelweise über die Zeit integriert wird, beispielsweise über die vorbestimmte Zeit t.

Dies bedeutet zum Beispiel, dass mehrere optische Fluss-Matrizen über die Zeit aggregiert werden, dies insbesondere in einer Heatmap.

Gemäß Block 611 ist vorgesehen, dass ein Schwellwert vorgegeben wird, basierend auf welchem eine Maske von statischen Bereichen der Fensterscheibe ermittelt wird.

Gemäß Block 613 ist vorgesehen, dass die zuvor ermittelte Kalibrierungsmaske und die vorstehend beschriebene Maske überlagert werden, um eine überlagerte Maske zu erhalten.

Gemäß Block 615 ist vorgesehen, dass Bereiche aus der überlagerten Maske bestimmt werden, die bezogen auf die Kalibrierungsmaske neu hinzugekommen sind.

Diese gemäß Block 615 bestimmten Bereiche werden gemäß Block 617 ausgegeben, beispielsweise an einen Zugführer gesendet oder an einen Betreiber des Schienenfahrzeugs.

Das Verfahren endet im Block 619.

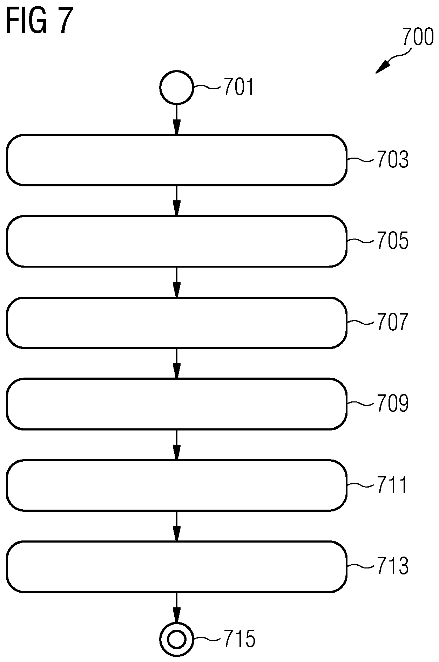

FIG 7 zeigt ein Ablaufdiagramm 700 eines Kalibrierungsverfahrens, wie es für eine Anomaliedetektion zum Einsatz kommen kann. Dieses Kalibrierungsverfahren kann auch als ein Anomaliedetektionskalibrierungsverfahren bezeichnet werden.

Es wird die gleiche Videokamera verwendet, wie sie bereits zuvor im Zusammenhang mit den FIG 5 und FIG 6 beschrieben wurde.

Das Verfahren startet beim Block 701. Gemäß Block 703 ist vorgesehen, dass die Videokamera initialisiert wird.

Gemäß Block 705 ist vorgesehen, dass analog zum Block 505 gemäß Fig. 5 Objekte beseitigt oder entfernt werden, die sich zwischen Videokamera und Fensterscheibe befinden, sodass die Videokamera eine freie Sicht auf die Fensterscheibe hat.

Gemäß Block 707 ist vorgesehen, dass analog zum Block 507 sichergestellt wird, dass die Fensterscheibe frei von einer Beeinträchtigung einer Transparenz ist. Auf die entsprechenden Ausführungen wird zur Vermeidung von Wiederholungen verwiesen.

Gemäß einem Block 709 ist vorgesehen, dass ein Kalibrierungsmodus aktiviert wird. Dies insbesondere analog zum Block 511, wie er im Rahmen der Beschreibung zu FIG 5 beschrieben wurde.

Gemäß einem Block 711 ist vorgesehen, dass die Videokamera Videobilder der Fensterscheibe aufnimmt, während sich das Schienenfahrzeug bewegt und auch während das Schienenfahrzeug stillsteht. Diese Videobilder können als Anomaliereferenzvideobilder bezeichnet werden.

Basierend auf diesen aufgenommenen Videobildern ist gemäß Block 713 vorgesehen, dass ein Anomaliedetektor trainiert wird, sodass als Ergebnis des Trainings ein trainierter Anomaliedetektor bereitgestellt wird. Der Anomaliedetektor kann auch als ein Anomaliedetektionsmodell bezeichnet werden.

Das Verfahren endet im Block 715.

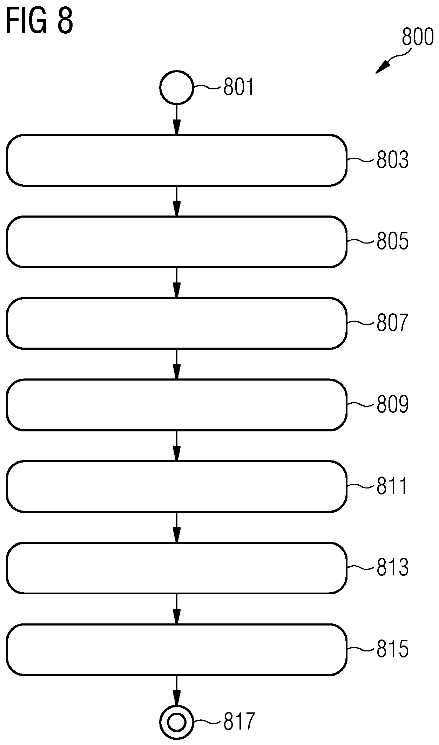

FIG 8 zeigt ein Ablaufdiagramm 800 eines Anomaliedetektionsverfahrens vorstehend einfach auch nur als Anomaliedetektion bezeichnet.

Es wird die gleiche Videokamera verwendet, wie sie bereits zuvor beim Kalibrierungsverfahren gemäß FIG 7 beschrieben wurde.

Die Anomaliedetektion startet beim Block 801. Gemäß Block 803 ist vorgesehen, dass die Videokamera initialisiert wird.

Gemäß Block 805 ist vorgesehen, dass der zuvor trainierte Anomaliedetektor bereitgestellt wird, beispielsweise aus einem Speicher geladen wird.

Gemäß Block 807 ist vorgesehen, dass Videobilder der Fensterscheibe durch die Videokamera aufgenommen werden, wobei ein Anomaliedetektionsscore pro Pixel der Videobilder berechnet wird.

Gemäß Block 809 ist vorgesehen, dass der pixelweise berechnete Anomaliedetektionsscore über eine Zeit in einer Heatmap aggregiert wird.

Gemäß Block 811 ist vorgesehen, dass basierend auf einem weiteren Schwellwert und basierend auf der Heatmap gemäß Block 809 eine Maske von anomalen Bereichen der Fensterscheibe ermittelt wird.

Diese Bereiche werden gemäß Block 813 aus der Maske abgerufen und gemäß 815 ausgegeben, beispielsweise an einen Betreiber des Schienenfahrzeugs oder an einen Zugführer gesendet.

Das Verfahren endet im Block 817.

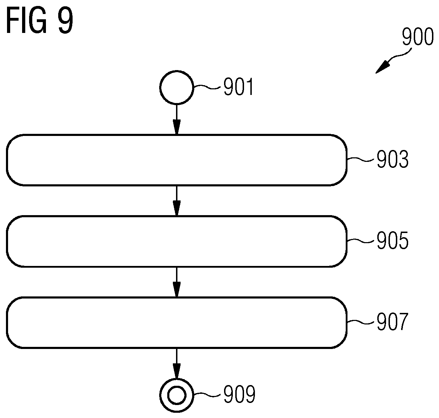

FIG 9 zeigt ein Ablaufdiagramm 900 eines Verfahrens zum Erkennen einer Beeinträchtigung einer Transparenz einer Fensterscheibe eines Schienenfahrzeugs.

Dieses Verfahren verwendet die zuvor beschriebenen Ergebnisse der Anomaliedetektion gemäß FIG 8 und des Ergebnisses des Erkennens der Beeinträchtigung basierend auf dem Ablaufdiagramm der FIG 6, was nachfolgend erläutert wird.

Das Verfahren startet im Block 901.

Gemäß Block 903 ist vorgesehen, dass die Bereiche, in denen eine Beeinträchtigung einer Transparenz der Fensterscheibe erkannt wurde basierend auf dem optischen Fluss, bereitgestellt werden.

Gemäß Block 905 ist vorgesehen, dass die im Zusammenhang mit FIG 8 erkannten Bereiche der Maske von anomalen Bereichen bereitgestellt werden.

Gemäß Block 907 ist vorgesehen, dass die Bereiche der Maske von anomalen Bereichen gemäß Ablaufdiagramm gemäß FIG 8 mit den Ergebnissen des Verfahrens gemäß FIG 6 zusammengeführt werden. Mit anderen Worten ist gemäß dem Block 907 vorgesehen, dass die Anomaliemaske mit der überlagerten Maske zusammengeführt wird, um eine zusammengeführte Maske zu erhalten, wobei die Beeinträchtigung der Transparenz basierend auf der zusammengeführten Maske erkannt wird.

Das Verfahren endet im Block 909.

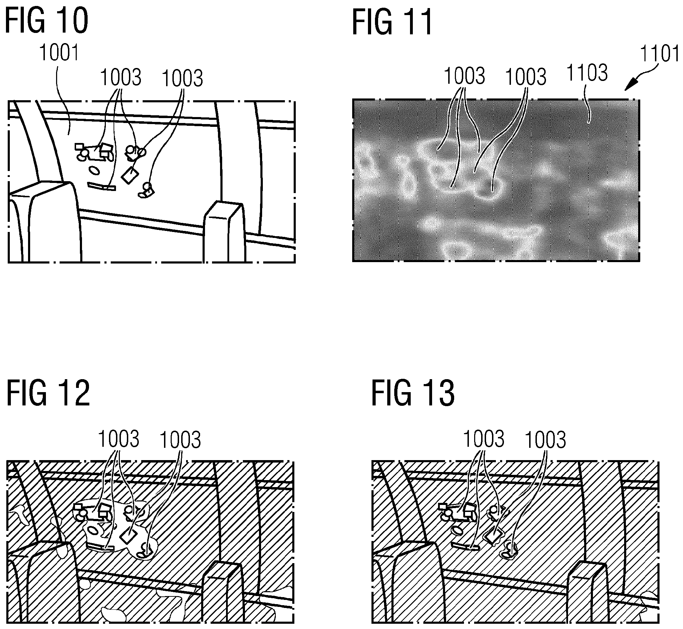

FIG 10 zeigt eine Fensterscheibe 1001 eines Schienenfahrzeugs. Auf einer Innenseite der Fensterscheibe 1001 befinden sich mehrere Aufkleber 1003 als Beispiel für eine Beeinträchtigung einer Transparenz der Fensterscheibe 1001.

FIG 11 zeigt eine Heatmap 1101, wie er im Rahmen der vorstehenden Ausführungen basierend auf einem entsprechenden optischen Fluss ermittelt wurde.

Die Aufkleber 1003 entsprechen den statischen Bereichen. Bereiche, die mit dem Bezugszeichen 1103 versehen sind, sind Bereiche, die gemäß dem optischen Fluss sich bewegen. Wie die Heatmap 1101 der FIG 11 zeigt, scheinen sich auch Bereiche außerhalb der Fensterscheibe 1001 zu bewegen, was allerdings seine Ursache darin haben kann, dass die Videokamera vibriert beziehungsweise auch ein Innenraum leicht vibrieren kann bei einer Fahrt des Schienenfahrzeugs.

FIG 12 zeigt ein Ergebnis einer Anomaliedetektion. Die Aufkleber 1003 wurden als Anomalie erkannt.

FIG 13 zeigt eine Überlagerung des Ergebnisses der FIG 12 und die Heatmap 1101 der FIG 11. Die Aufkleber 1003 sind deutlich zu erkennen als Beeinträchtigungen einer Transparenz der Fensterscheibe 1001.

*Unabhängig vom grammatikalischen Geschlecht eines bestimmten Begriffes sind Personen mit männlicher, weiblicher oder anderer Geschlechteridentität mit umfasst.*

## Patentansprüche

1. Verfahren zum Erkennen einer Beeinträchtigung einer Transparenz einer Fensterscheibe (305) eines Schienenfahrzeugs (301), umfassend die folgenden Schritte:
a) Aufnehmen (101) von Videobildern der Fensterscheibe (305) mittels einer in einem Innenraum (303) angeordneten Videokamera, insbesondere CCTV-Videokamera, während einer Bewegung des Schienenfahrzeugs (301), um eine Bildsequenz aus den aufgenommen Videobildern zu erzeugen,
b) Berechnen (103) eines optischen Flusses für die Videobilder der Bildsequenz,
c) Erkennen (105) einer Beeinträchtigung einer Transparenz der Fensterscheibe (305) basierend auf dem berechneten optischen Fluss.

2. Verfahren nach Anspruch 1, wobei der berechnete optische Flusses über die Zeit integriert wird, wobei die Beeinträchtigung der Transparenz basierend auf dem zeitlichen Integral des berechneten optischen Flusses erkannt wird.

3. Verfahren nach Anspruch 1 oder 2, wobei der optische Fluss pixelweise für die Pixel der Videobilder berechnet wird, sodass den Pixeln der Videobilder jeweils ein optischer Flusswert zugeordnet wird, wobei die Beeinträchtigung der Transparenz basierend auf den jeweiligen optischen Flusswerten erkannt wird.

4. Verfahren nach Anspruch 2 und nach Anspruch 3, wobei der pixelweise berechnete optische Fluss pixelweise über die Zeit integriert wird, sodass den Pixeln der Videobilder jeweils ein zeitlicher Integralwert zugeordnet wird, wobei die Beeinträchtigung der Transparenz basierend auf den jeweiligen zeitlichen Integralwerten erkannt wird.

5. Verfahren nach einem der vorherigen Ansprüche, wobei basierend auf einem Schwellwert eine Maske von statischen Bereichen der Fensterscheibe (305) ermitteltet wird, wobei die Beeinträchtigung der Transparenz basierend auf der ermittelten Maske erkannt wird.

6. Verfahren nach einem der vorherigen Ansprüche, wobei zeitlich vor dem Schritt a) eine Kalibrierung durchgeführt wird, wobei die Kalibrierung die folgenden Schritte umfasst:
Aufnehmen von Videoreferenzbildern der Fensterscheibe (305) mittels der im Innenraum (303) angeordneten Videokamera während einer Bewegung des Schienenfahrzeugs (301), um eine Referenzbildsequenz aus den aufgenommen Videoreferenzbildern zu erzeugen, wobei sich die Fensterscheibe (305) während der Aufnahme der Videoreferenzbilder in einem bekannten Zustand befindet,
Berechnen eines optischen Referenzflusses für die Videorefrenzbilder der Referenzbildsequenz,
wobei die Beeinträchtigung der Transparenz basierend auf dem optischen Referenzfluss erkannt wird.

7. Verfahren nach Anspruch 6, wobei basierend auf dem optischen Referenzfluss eine die sich im bekannten Zustand befindende Fensterscheibe (305) repräsentierende Kalibrierungsmaske ermittelt wird, wobei die Beeinträchtigung der Transparenz basierend auf der Kalibrierungsmaske erkannt wird.

8. Verfahren nach Anspruch 7 und nach Anspruch 5, wobei die Kalibrierungsmaske und die ermittelte Maske überlagert werden, um eine überlagerte Maske zu erhalten, wobei die Beeinträchtigung der Transparenz basierend auf der überlagerten Maske erkannt wird.

9. Verfahren nach einem der vorherigen Ansprüche, wobei basierend auf den aufgenommenen Videobildern eine Anomaliedetektion für die Fensterscheibe (305) durchgeführt wird, um eine Anomalie der Fensterscheibe (305) zu detektieren, wobei die Beeinträchtigung der Transparenz der Fensterscheibe (305) basierend auf einem Ergebnis der Anomaliedetektion erkannt wird.

10. Verfahren nach Anspruch 9, wobei basierend auf dem Anomaliedetektionsergebnis eine Anomaliemaske von anomalen Bereichen der Fensterscheibe (305) ermittelt wird, wobei die Beeinträchtigung der Transparenz basierend auf der Anomaliemaske erkannt wird.

11. Verfahren nach Anspruch 10 soweit rückbezogen auf Anspruch 5 oder auf Anspruch 8, wobei die Anomaliemaske mit der ermittelten Maske oder mit der überlagerten Maske zusammengeführt wird, um eine zusammengeführte Maske zu erhalten, wobei die Beeinträchtigung der Transparenz basierend auf der zusammengeführten Maske erkannt wird.

12. Verfahren nach einem der Ansprüche 9 bis 11, wobei zeitlich vor dem Schritt a) eine Anomaliekalibrierung durchgeführt wird, wobei die Anomaliekalibrierung die folgenden Schritte umfasst:
Aufnehmen von Anomaliereferenzvideobildern der Fensterscheibe (305) mittels der im Innenraum (303) angeordneten Videokamera während eines Stillstands und/oder während einer Bewegung des Schienenfahrzeugs (301), um eine Anomaliereferenzbildsequenz aus den aufgenommen Anomaliereferenzvideobildern zu erzeugen, wobei sich die Fensterscheibe (305) während der Aufnahme der Anomaliereferenzvideobilder in einem bekannten Zustand befindet,
Trainieren eines Anomaliedetektionsmodells basierend auf den Anomaliereferenzvideobildern der Anomaliereferenzbildsequenz, um ein trainiertes Anomaliedetektionsmodell zu erhalten,
wobei die Beeinträchtigung der Transparenz basierend auf dem trainierten Anomaliedetektionsmodell erkannt wird.

13. System (201) zum Erkennen einer Beeinträchtigung einer Transparenz einer Fensterscheibe (305) eines Schienenfahrzeugs (301), umfassend:
eine Videokamera (203), insbesondere CCTV-Videokamera, welche eingerichtet ist, Videobilder einer Fensterscheibe (305) eines Schienenfahrzeugs (301) während einer Bewegung des Schienenfahrzeugs (301) aufzunehmen, um eine Bildsequenz aus den aufgenommen Videobildern zu erzeugen,
eine Auswerteeinrichtung (205), welche eingerichtet ist, einen optischen Fluss für die Videobilder der Bildsequenz zu berechnen,
wobei die Auswerteeinrichtung (205) eingerichtet ist, eine Beeinträchtigung der Transparenz der Fensterscheibe (305) basierend auf dem berechneten optischen Fluss zu erkennen.

14. Schienenfahrzeug (301), umfassend das System (201) nach Anspruch 13, wobei die Videokamera (203) innerhalb eines Innenraums (303) des Schienenfahrzeugs (301) angeordnet ist.

15. Computerprogramm (403), umfassend Befehle, die bei Ausführung des Computerprogramms (403) durch einen Computer diesen veranlassen, ein Verfahren gemäß einem der Ansprüche 1 bis 12 auszuführen.

16. Maschinenlesbares Speichermedium (401), auf dem das Computerprogramm (403) nach Anspruch 15 gespeichert ist.
